# EUROPEAN PATENT SPECIFICATION

(11) **EP 1 804 097 B1**
(45) Date of publication and mention of the grant of the patent: **10.02.2010**
(21) Application number: 06127232.4
(22) Date of filing: 27.12.2006
(51) Int. Cl.: G02B 7/02

(54) **Method of forming a ring shaped stopper for use in a camera**
Herstellungsmethode für ringförmigen Anschlag zur Verwendung in einer Kamera
Procédé de fabrication d'une butée annulaire à utiliser dans une caméra

(30) Priority: 28.12.2005 JP 2005378878
(43) Date of publication of application: 04.07.2007
(73) Proprietor: Mitsumi Electric Co., Ltd., Tama-shi Tokyo (JP)
(72) Inventor: Saito, Masahiro Mitsumi Electric Co., Ltd., Yamagata-shi Yamagata Yamagata (JP)
(74) Representative: Solf, Alexander

(56) References cited:
- EP-A- 1 429 168
- EP-A1- 1 484 636
- EP-A2- 1 465 411
- US-A1- 2002 001 137

## Description

### BACKGROUND OF THE INVENTION

### Field of the Invention

The present invention relates to a manufactoring method for a ring-shaped stopper to be used in a camera module, more particularly a relatively small camera module to be mounted on an electronic apparatus such as a back monitor for a vehicle and a cellular phone and the like.

### Description of the Prior Art

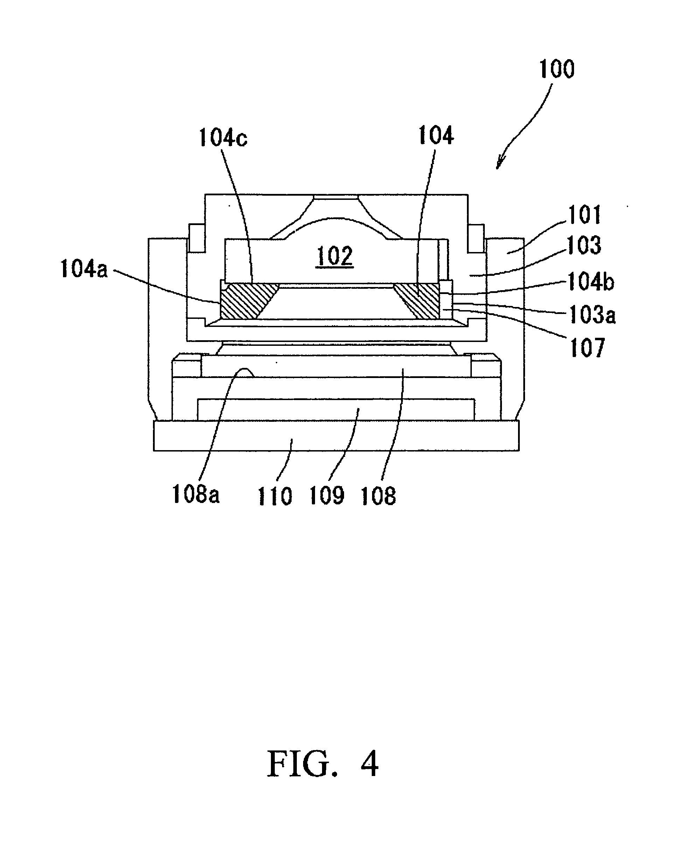

A relatively small camera module is mounted on an electronic apparatus such as a cellular phone and the like. Such a camera module includes an image pick-up device such as a CMOS sensor or a CCD sensor. FIG. 4 is a cross-sectional view showing a conventional camera module 100. The camera module 100 includes a housing 101 which constitutes an outer shell of the camera module 100, a lens unit 102 having an optical system of the camera module 100, a cylindrical barrel 103 made of a synthetic resin for holding the lens unit 102, a ring-shaped stopper 104 made of a synthetic resin for fixing the lens unit 102 inside the barrel 103, an IR cut filter 108 disposed below the lens unit 102, an image pick-up device 109 provided below the IR cut filter 108, and a substrate 110 on which the image pick-up device 109 is mounted.

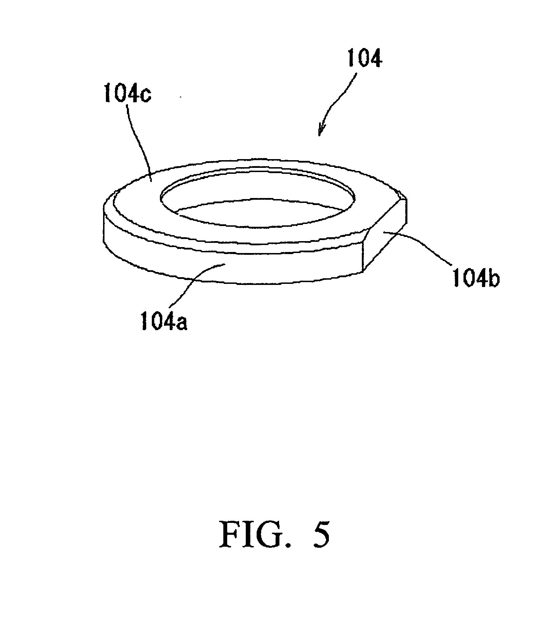

As shown in FIG. 5, the stopper 104 is a ring-shaped member made of a synthetic resin, and it is formed by means of injection molding. In more details, the stopper 104 is formed from a stopper molded body having a gate (not shown in the drawing). Such a gate is necessarily formed for injecting a synthetic resin material into a mold die for the stopper 104, and it protrudes horizontally from a part of the outer circumferential surface of the stopper molded body. The stopper 104 is obtained by cutting away the gate formed on the stopper molded body after the stopper molded body has been removed from a mold die for injection molding. Therefore, the stopper 104 thus obtained has a cutting surface 104b at which the gate was formed, that is, a part of the stopper 104 has been cut away together with the gate and as a result of this the cutting surface 104b is formed.

The thus manufactured stopper 104 is press-fitted into the barrel 103 from the bottom thereof, and then the outer circumferential surface 104a of the stopper 104 other than the cutting surface 104b is bonded to the inner circumferential surface 103a of the barrel 103. In this state, the upper surface of the stopper 104 is in contact with the bottom surface of the lens unit 102 so that the lens unit 102 is held inside the barrel 103 by means of the stopper 104.

However, in the conventional camera module described above, a part of the stopper 104 where the cutting surface 104b is formed is not bonded to the inner circumferential surface 103a of the barrel 103, and thus there is a problem in that a gap is created between the cutting surface 104b and the inner circumferential surface 103a of the barrel 103.

In the camera module described above, when the stopper 104 is press-fitted into the barrel 103 from the bottom thereof, the outer circumferential surface 104a of the stopper 104 is in friction with the inner circumferential surface of the barrel 103. Therefore, there is a case that dust of the synthetic resin is produced due to the friction between the outer circumferential surface 104a of the stopper 104 and the inner circumferential surface 103a of the barrel 103, and the thus produced dust may fall under the stopper 104 through the gap 107 and then adhere to the surface of the IR cut filter 108. If the dust adheres to the surface of the IR cut filter 108 through the gap 107, it becomes impossible to obtain a fine image by the image pick-up device 109.

### SUMMARY OF THE INVENTION

The present invention has been made in view of the above problem. It is, therefore, an object of the present invention to provide a camera module which does not have any gap between an outer circumferential surface of a ring-shaped stopper and an inner circumferential surface of a barrel.

In order to achieve the above object, the present invention is directed to a manufacturing method as defined in claim 1 and a camera module as defined in claim 2.

Since no gap is created between the entire outer circumferential surface of the stopper and the inner circumferential surface of the barrel, it is possible to prevent dust which may be produced by the friction between the outer circumferential surface of the stopper and the inner circumferential surface of the barrel when they are press-fitted from falling in the space inside the camera module and then adhering to the surface of the IR filter.

In the camera module according to the present invention, the stopper has a depression in the upper surface thereof at a position where the base end of the gate was located.

According to the structure described above, there is no possibility that a remaining part of the gate protrudes upwardly beyond the upper surface of the stopper, and thus the upper surface of the stopper can be made close contact with the bottom of the lens unit.

The above and other objects, features, and advantages of the present invention will be apparent from the following description when taken in conjunction with the accompanying drawings which illustrate preferred embodiments of the present invention by way of example.

### BRIEF DESCRIPTION OF THE DRAWINGS

FIG. 1 is a cross-sectional view showing a camera module according to an embodiment of the present invention;
FIG. 2 is a perspective view of a stopper molded body 5A having a gate 5c from which a stopper 5 of the camera module shown in FIG. 1 is formed;
FIG. 3 is a perspective view of the stopper 5 of the camera module shown in FIG. 1;
FIG. 4 is a cross-sectional view showing a conventional camera module; and
FIG. 5 is a perspective view of a stopper 104 for use in the camera module shown in FIG. 4.

### DETAILED DESCRIPTION OF THE INVENTION

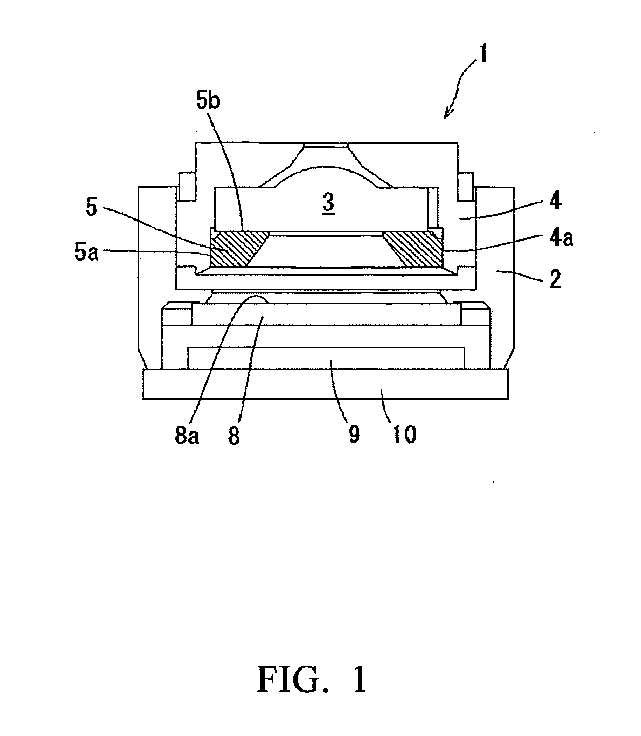

A camera module according to an embodiment of the present invention will be described below with reference to FIGS. 1 to 3. FIG. 1 is a cross-sectional view showing a camera module 1 according to an embodiment of the present invention. Note that in the following description, the terms "upper" or "top" and "lower" or "bottom" are respectively used to denote the direction in FIG. 1 where a barrel 4 of a camera module 1 is located and the direction in FIG. 1 where a substrate 10 is located.

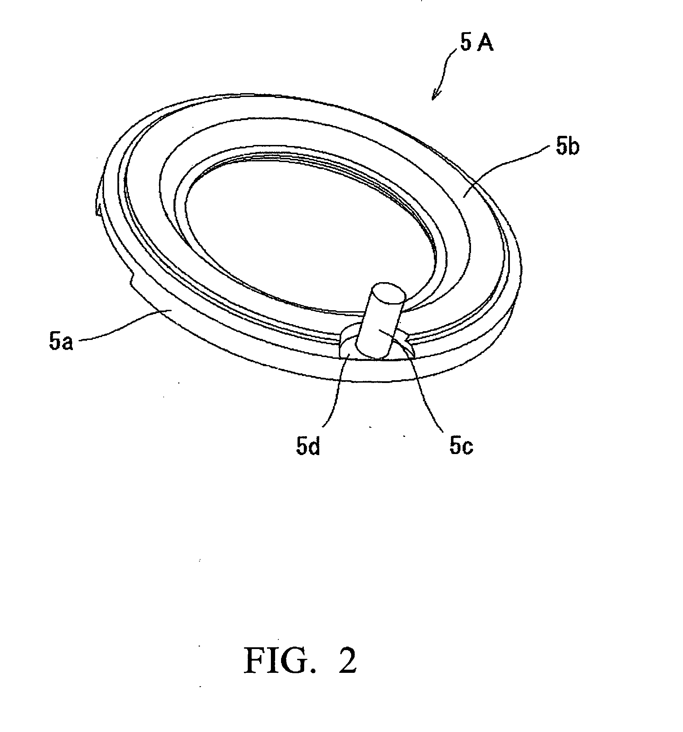

The camera module 1 is composed from a housing 2 which constitutes an outer shell of the camera module 1; a lens unit 3 having an optical system of the camera module 1; a cylindrical barrel 4 made of a synthetic resin for holding the lens unit 3, the cylindrical barrel 4 having an inner circumferential surface 4a; a ring-shaped stopper 5 made of a synthetic resin through injection molding for fixing the lens unit 3 inside the barrel 4, the stopper 5 having an outer circumferential surface 5a; and an image pick-up device 9 provided below the lens unit 3. As shown in FIG. 2, the stopper 5 has been formed from a stopper molded body 5A having a gate 5c produced during the injection molding process so as to protrude upwardly from a part of an upper surface of the stopper molded body 5A. The gate 5c is cut off from the stopper molded body 5A after the stopper molded body 5A has been removed from a die for injection molding to obtain the stopper 5. In the camera module 1 described above, the entire of the outer circumferential surface 5a of the stopper 5 is in contact with the inner circumferential surface 4a of the barrel 4 without any gap therebetween.

In more details, the housing 2 is a component having a roughly cubic shape and having a hollow space therein, and made of a synthetic resin material. Inside the hollow space of the housing, the barrel 4 (which will be described later in detail) is disposed.

The barrel 4 is a cylindrical component made of a synthetic resin and having a hollow space therein. Inside the hollow space of the barrel 4, the lens unit 3 is provided, and a stopper (which will be described later in detail) 5 is also provided inside the hollow space below the lens unit 3. The lens unit 3 constitutes an optical system of the camera module 1.

The stopper 5 is a ring-shaped member made of a synthetic resin material and formed by insulating molding. As described above, the stopper 5 is disposed at the lower side of the hollow space of the barrel 4. As shown in FIG. 2, the stopper 5 is formed from a stopper molded body 5A having a gate 5c which has been formed during the injection molding process. The gate 5c is formed on a part of the upper surface of the stopper molded body 5A so as to protrude upwardly therefrom, and the gate 5c is cut off from the stopper molded body 5A after the stopper molded body 5A has been removed from a die (not shown in the drawing) for the injection molding.

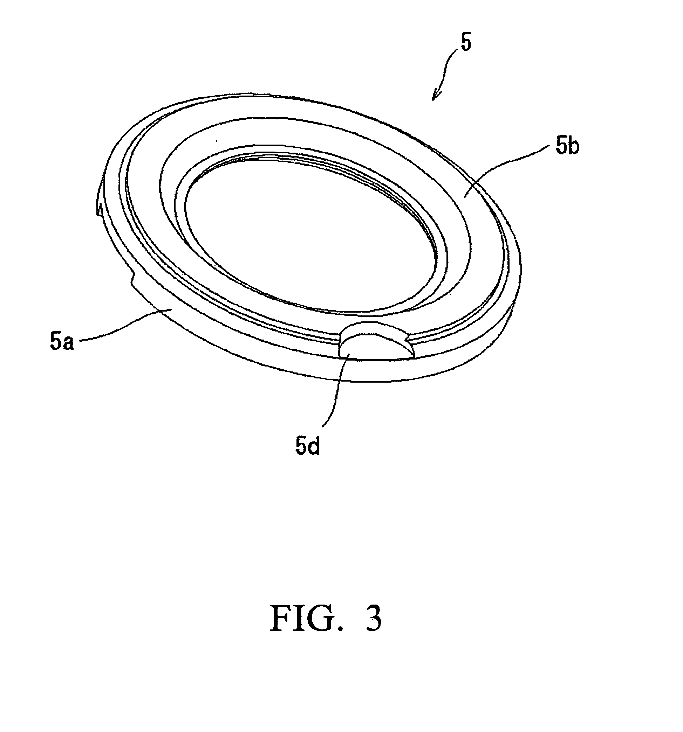

As shown in FIG. 2, the upper surface of the stopper 5 is formed with a depression or notch 5d around the base end of the gate 5c, which is depressed so as to be lower than the upper surface 5b of the stopper 5. The gate 5c is cut away at the base end thereof, whereby the stopper 5 is formed. FIG. 3 shows a state that the gate 5c is cut away from the stopper molded body 5A, that is, FIG. 3 shows the stopper 5.

The thus formed stopper 5 is press-fitted into the barrel 4 from the bottom thereof so that the entire of the outer circumferential surface 5a of the stopper 5 is in contact with the inner circumferential surface 4a of the barrel 4 and the upper surface 5b of the stopper 5 is also in contact with the bottom of the lens unit 3. In this state, the stopper 5 is bonded with the barrel 4. In this way, the lens unit 3 is held inside the barrel 4 by the stopper 5.

Note that in FIG. 1 the reference numeral 9 denotes an image pick-up device disposed below the lens unit 3, and the image pick-up device 9 is mounted on the substrate 10. Further, the reference numeral 8 denotes an IR cut filter having an upper surface 8a.

Hereinbelow, a description will be made with regard to the functions and advantages of the embodiment of the camera module 1 described above.

In the embodiment described above, the stopper 5 is formed from the stopper molded body 5A having the gate 5c which has been formed during the injection molding process. The gate 5c is formed on a part of the upper surface of the stopper molded body 5A so as to protrude upwardly therefrom. The gate 5c is cut off after the stopper molded body 5A has been removed from a die for injection molding to form the stopper 5 having a ring shape and having an outer circumferential surface 5a. When the camera module 1 is assembled, the stopper 5 is press-fitted into the hollow space of the barrel 4 from the bottom thereof so that the entire outer circumferential surface 5a of the stopper 5 is in contact with the inner circumferential surface of the barrel 4 and the upper surface 5b of the stopper 5 is also in contact with the bottom of the lens unit 3. Therefore, no gap is created between the entire outer circumferential surface 5a of the stopper 5 and the inner circumferential surface 4a of the barrel 4. With this structure, it is possible to prevent dust which may be produced by the friction between the outer circumferential surface 5a of the stopper 5 and the inner circumferential surface 4a of the barrel 4 when they are press-fitted from falling in the space inside the camera module 1 and then adhering on the surface 8a of the IR filter 8.

Further, in the camera module 1 of the embodiment described above, the depression 5d is formed at a position where the end portion of the gate 5c has been located. The depression 5d is formed so as to be lower than the upper surface 5b of the stopper 5. Therefore, there is no possibility that a remaining part of the gate 5c protrudes upwardly beyond the upper surface 5b of the stopper 5, and thus the upper surface 5b of the stopper 5 can be made close contact with the bottom of the lens unit 3.

Finally, it should be understood that the present invention is not limited to the preferred embodiment described hereinabove and, needless to say, a variety of modifications or variations may be made without departing from the scope of the invention defined in the following claims.

## Claims

1. A method for manufacturing a ring-shaped stopper (5) to be used in a camera module (1), the camera module (1) comprising a housing (2) which constitutes an outer shell of the camera module (1); a lens unit (3) having an optical system of the camera module (1); a cylindrical barrel (4) made of a synthetic resin for holding the lens unit (3), the cylindrical barrel (4) having an inner circumferential surface (4a) and an upper portion located in an upper portion of the camera module (1); and an image pick-up device (9) provided below the lens unit (3) and arranged on a substrate (10) which is located on a lower portion of the camera module (1); wherein the ring-shaped stopper (5) is used for fixing the lens unit (3) inside the barrel (4),
**CHARACTERIZED IN THAT** the method for manufacturing the ring-shaped stopper (5) comprises the steps of:
- forming a ring-shaped stopper molded body (5A) made of a synthetic resin through injection molding using a die so that the stopper molded body (5A) has an outer circumferential surface (5a) having size and shape that can be fitted in the barrel (4) in contact with the inner circumferential surface (4a) of the barrel (4) without any gap therebetween and a gate (5c) produced during the injection molding process so as to protrude upwardly from a depression (5d) formed in a part of an upper surface (5b) of the stopper molded body (5A), wherein the upper surface (5b) of the stopper molded body (5A) is a surface directed to the upper portion of the camera module when it will be assembled in the camera module (1) as the ring-shaped stopper (5),
- removing the thus formed stopper molded body (5A) with the gate (5c) from the die; and
- cutting off the gate (5c) at its end portion located in the depression (5d) so that a remaining part of the gate (5c), if any, does not protrude beyond the upper surface (5b) of the stopper molded body (5A) to thereby manufacture the stopper (5).

2. A camera module as defined in claim 1 provided with the ring-shaped stopper (5) manufactured by the method defined in claim 1.

## Patentansprüche

1. Ein Verfahren zur Herstellung eines in einem Kameramodul (1) zu verwendenden ringförmigen Anschlags (5), wobei das Kameramodul (1) ein Gehäuse (2), das eine Außenschale des Kameramoduls (1) aufbaut; eine Linseneinheit (3) mit einem optischen System des Kameramoduls (1); eine aus einem synthetischen Harz hergestellte zylindrische Trommel (4) zum Halten der Linseeinheit (3), wobei die zylindrische Trommel (4) eine innere Umfangsfläche (4a) und einen in einem oberen Teil des Kameramoduls (1) liegenden oberen Teil aufweist; und eine Bildauffangvorrichtung (9), die unterhalb der Linseneinheit (3) vorgesehen und auf einem Substrat (10) angeordnet ist, das auf einem unteren Teil des Kameramoduls (1) angeordnet ist; umfasst, wobei der ringförmige Anschlag (5) zur Fixierung der Linseneinheit (3) im Inneren der Trommel (4) verwendet wird,
**DADURCH GEKENNZEICHNET, DASS** das Verfahren zur Herstellung des ringförmigen Anschlags (5) die Schritte einschließt:
- Bilden eines ringförmigen Anschlag-Formkörpers (5A), der aus einem synthetischen Harz durch Spritzguss unter Verwendung einer Düse hergestellt ist, so dass der Anschlag-Formkörper (5A) eine äußere Umfangsfläche (5a) mit einer Größe und Form, die in die Trommel (4) in Kontakt mit der inneren Umfangsfläche (4a) der Trommel (4) ohne einen Spalt dazwischen eingepasst werden kann, und einen während des Spritzgussverfahrens hergestellten Anguss (5c) aufweist, so dass er aus einer Vertiefung (5d), die in einen Teil einer oberen Fläche (5b) des Anschlagformkörpers (5A) ausgebildet ist, emporragt, wobei die obere Fläche (5b) des Anschlagformkörpers (5A) eine auf den oberen Teil des Kameramoduls ausgerichtete Fläche ist, wenn er als der ringförmige Anschlag (5) mit dem Kameramodul (1) zusammengebaut wird,
- Entfernen des so geformten Anschlagformkörpers (5A) mit dem Anguss (5c) aus der Düse; und
- Abschneiden des Angusses (5c) an seinem in der Vertiefung angeordneten Endteil (5d), so dass ein verbleibender Teil des Angusses (5c), sofern vorhanden, nicht über die obere Fläche (5b) des Anschlagformkörpers (5A) emporragt, um **dadurch** den Anschlag (5) herzustellen.

2. Ein Kameramodul nach Anspruch 1, das mit dem durch das Verfahren nach Anspruch 1 hergestellten ringförmigen Anschlag (5) ausgestattet ist.

## Revendications

1. Procédé pour fabriquer une butée de forme annulaire (5) destinée à être utilisée sur un module d'appareil photo (1), le module d'appareil photo (1) comprenant un boîtier (2) qui constitue une coque externe du module d'appareil photo (1) ; une unité d'objectif (3) ayant un système optique du module d'appareil photo (1) ; un corps cylindrique (4) réalisé à partir d'une résine synthétique pour maintenir l'unité d'objectif (3), le corps cylindrique (4) ayant une surface circonférentielle interne (4a) et une partie supérieure positionnée dans une partie supérieure du module d'appareil photo (1) ; et un dispositif de prise d'image (9) prévu au-dessous de l'unité d'objectif (3) et agencé sur un substrat (10) qui est positionné sur une partie inférieure du module d'appareil photo (1) ; dans lequel la butée de forme annulaire (5) est utilisée pour fixer l'unité d'objectif (3) à l'intérieur du corps (4),
**caractérisé en ce que** le procédé pour fabriquer la butée de forme annulaire (5) comprend les étapes consistant à :
- former un corps moulé (5A) de butée de forme annulaire réalisé à partir d'une résine synthétique par moulage par injection en utilisant une matrice de sorte que le corps moulé (5A) de butée a une surface circonférentielle externe (5a) ayant une taille et une forme qui peuvent s'adapter dans le corps (4) en contact avec la surface circonférentielle interne (4a) du corps (4) sans aucun espace entre eux et une carotte (5c) produite pendant le procédé de moulage par injection afin de faire saillie vers le haut à partir d'une dépression (5d) formée dans une partie d'une surface supérieure (5b) du corps moulé (5A) de butée, dans lequel la surface supérieure (5b) du corps moulé (5A) de butée est une surface dirigée vers la partie supérieure du module d'appareil photo lorsqu'elle est assemblée dans le module d'appareil photo (1) en tant que butée de forme annulaire (5),
- retirer le corps moulé (5A) de butée ainsi formé avec la carotte (5c) de la matrice ; et
- couper la carotte (5c) au niveau de sa partie d'extrémité située dans la dépression (5d) de sorte qu'une partie restante de la carotte (5c), si elle existe, ne fait pas saillie au-delà de la surface supérieure (5b) du corps moulé (5A) de butée pour fabriquer ainsi la butée (5).

2. Module d'appareil photo selon la revendication 1, prévu avec la butée de forme annulaire (5) fabriquée selon le procédé défini dans la revendication 1.
